# EUROPÄISCHE PATENTSCHRIFT

(11) **EP 1 733 148 B1**
(45) Veröffentlichungstag und Bekanntmachung des Hinweises auf die Patenterteilung: **25.02.2009**
(21) Anmeldenummer: 05737868.9
(22) Anmeldetag: 30.03.2005
(51) Int. Cl.: F16B 5/06

(54) **HAUSHALTSGERÄT MIT RAST- UND GEGENRASTMITTELN**
DOMESTIC APPLIANCE COMPRISING DETENT ELEMENTS AND DETENT COUNTER-ELEMENTS
APPAREIL ELECTROMENAGER COMPRENANT UN ELEMENT D'ENCLIQUETAGE ET UN ELEMENT DE CONTRE-ENCLIQUETAGE

(30) Priorität: 31.03.2004 DE 102004015915
(43) Veröffentlichungstag der Anmeldung: 20.12.2006
(73) Patentinhaber: BSH Bosch und Siemens Hausgeräte GmbH, 81739 München (DE)
(72) Erfinder: MAZEJ, Stanislav, 3303 Gomilsko (SI); OGRIZEK, Darko, 3320 Velenje (SI); SEDOVSEK, Aleksander, 3330 Mozirje (SI); SEMEJA, Uros, 3327 Smartno ob Paki (SI); ZIBRET, Igor, 3327 Smartno ob Paki (SI)
(86) Internationale Anmeldenummer: PCT/EP2005/051435
(87) Internationale Veröffentlichungsnummer: WO 2005/095806

(56) Entgegenhaltungen:
- DE-A1- 3 636 176
- DE-A1- 10 142 508
- DE-A1- 19 540 823
- US-A- 4 479 737

## Beschreibung

Die Erfindung betrifft ein Haushaltsgerät mit mindestens einem ersten Gehäuseteil,
das ein Rastmittel aufweist und mindestens einem zweiten Gehäuseteil, das ein Gegen-rastmittel aufweist, welche Rast- und Gegenrastmittel zur Verbindung der Gehäuseteile vorgesehen sind und denen ein Sperrelement zugeordnet ist, durch welches das Rastmittel in einer Sperrposition des Sperrelements gegen Lösen von dem Gegenrastmittel gesichert ist.

Aus DE 101 42 508 A1 ist eine Rastvorrichtung zum Befestigen eines ersten
Körpers bekannt, der in einen zweiten Körper hineinsteckbar ist, wobei eine erste
Wand des ersten Körpers sich im wesentlichen im rechten Winkel zu einer zweiten Wand des zweiten Körpers erstreckt, mit einem Rastvorsprung, der auf einer von dem
zweiten Körper umschlossenen Innenseite der ersten Wand angeordnet ist, und der
durch eine von einem mit dem ersten Körper verbundenen Verbindungsmittel ausgeübte Kraft in eine Rastöffnung hineindrückbar ist.
Aus der Deutschen Offenlegungsschrift DE 195 40 823 A1 ist eine Vorrichtung für die Befestigung eines Geräuschkapselteil an einer Autokarosserie bekannt, bei der das Geräuschkapselteil und der Rahmen zueinander korrespondierende Zentrierelemente aufweisen. Mit einer federbelasteten Rastklinke im Bereich der Zentrieranordnung wird das Geräuschkapselteil am Rahmenteil fixiert.
Das US-Patent US 4,496,737 offenbart eine Vorrichtung zum mechanischen Verbinden der Enden zweier zueinander senkrechter Wandabschnitte. Der erste dieser Wandabschnitte weist eine von dem Wandabschnitt wegweisende Zunge auf, von der aus eine Arretierung zurück zum Wandabschnitt weist. In dem anderen Wandabschnitt ist eine Öffnung vorgesehen, durch die die Zunge des ersten Wandabschnitts geschoben werden kann. Außerdem ist in dem zweiten Wandabschnitt mittels einer Öffnung und einer weiteren Zunge ein Schlitz gebildet, in den das von dem ersten Wandabschnitt wegweisende Ende der Zunge des ersten Wandabschnitts hineingeschoben werden kann. Durch die von der Zunge des ersten Wandabschnitts zu diesem Wandabschnitt zurückweisende Arretierung sind die beiden Wandabschnitte nach dem Zusammenschieben gegen Lösen gesichert.
Schließlich offenbart die Deutsche Offenlegungsschrift DE 3636176 A1 ein Befestigungselement zum lösbaren Verbinden eines ersten Bauteils mit einem zweiten Bauteil, das ein an das erste Bauteil angelenktes Verbindungsteil aufweist. An dem Verbindungsteil ist eine Haltenase ausgebildet, die in ihrer Verrastlage die beiden Bauteile zueinander festlegt, wobei die beiden Bauteile aneinander gepresst werden.

Nachteilig bei der Rastvorrichtung aus dem Stand der Technik ist es jedoch, dass
Die Montage und die Demontage der Rastvorrichtung aufwendig ist.

Aufgabe der Erfindung ist es, eine gattungsgemäße Rastvorrichtung leichter montier- und demontierbar zu gestalten.

Erfindungsgemäß wird diese Aufgabe durch ein Haushaltsgerät mit den Merkmalen des Anspruchs 1 gelöst. Dadurch, dass das Sperrelement ein erstes, sich an einem der Gehäuseteile abstützendes Ende und ein zweites in der Sperrposition an dem Rastmittel verrastendes Ende aufweist, kann das Sperrelement in einfacher Weise gelöst werden. Eine Montage und Demontage der Gehäuseteile ist damit schneller und einfacher möglich.

In einer bevorzugten Ausgestaltung der Erfindung ist das Sperrelement derart am Gehäuseteil befestigt, dass es aus einer Freigabeposition in die Sperrposition bewegbar, vorzugsweise schwenkbar ist. So kann das Sperrelement schnell und einfach zwischen einer Freigabeposition und einer Sperrposition hin- und hergeschwenkt werden.

Vorzugsweise soll das Sperrelement in der Freigabeposition eine spannungsfreie
Lage einnehmen. Dies bedeutet, dass das Sperrelement in der verschwenkten Lage,
also in der Sperrposition unter Spannung an dem Rastmittel anliegt, was eine zusätzliche Haltekraft auf das Rastmittel ausübt. So ist das Sperrelement vorzugsweise in der Sperrposition elastisch vorgespannt am Rastmittel gehalten.

Das zweite Ende des Sperrelements kann in der Sperrposition in eine Rastnut oder einem Rastvorsprung am Rastmittel eingreifen. Dabei kann beispielsweise die Rastnut oder der Rastvorsprung dem Gegenrastmittel gegenüberliegend am Rastmittel vorgesehen sein. Der Rastvorsprung kann beispielsweise dachförmig das obere Ende eines als Federzunge ausgebildeten Sperrelements übergreifend ausgebildet sein. So wird das obere Ende des Sperrelements von oben und teilweise von links und rechts umgriffen. Ein als Rastnut ausgebildetes Gegenstück für das Sperrelement kann beispielsweise auch eine Kerbe in einer Seitenwand des Rastmittels sein, in die sich das obere Ende des Sperrmittels einklemmt.

Vorzugsweise ist das Sperrelement als eine am Gehäuseteil angeformte Federzunge ausgebildet, die aus einer entspannten, im wesentlichen parallel zum Rastmittel verlaufenden Freigabeposition in eine elastisch gespannte Sperrposition biegbar ist.

Das Rastmittel kann als ein am ersten Gehäuseteil angeformter, federnder Rasthaken ausgebildet ist, der in das als Rastausnehmung oder Rastvorsprung ausgebildetes Gegenrastmittel am zweiten Gehäuseteil eingreift.

Umgekehrt kann das Rastmittel auch als eine am ersten Gehäuseteil angeformte Rastausnehmung oder Rastvorsprung ausgebildet sein, in die ein als federnder Rasthaken ausgebildetes Gegenrastmittel des zweiten Gehäuseteils eingreift.

Für ein vereinfachtes Sperren der Rastmittel-Gegenrastmittel-Verbindung ist an dem das Sperrelement tragenden Gehäuseteil ein erster Wanddurchbruch vorgesehen, der auf einer vom Rastmittel abgewandten Seite des Sperrelements verlaufenden angeordnet ist und über den ein Werkzeug zum Schwenken des Sperrelement in die Sperrposition einführbar ist. Über diesen ersten Wanddurchbruch ist ein Werkzeug, wie beispielsweise ein Schlitzschraubendreher einführbar. Durch Schwenken des Schlitzschraubendrehers, bzw. durch Schwenken dessen Klinge wird das Sperrelement aus seiner Freigabeposition in Richtung des Rastmittels geschwenkt und das zweite Ende des Sperrelements in den Rastvorsprung des Rastmittels eingedrückt, bis das Sperrelement in seiner Sperrposition fixiert ist. So kann mit einfachen Werkzeugen eine insbesondere verdeckt im Gehäuse des Haushaltsgeräts vorgesehene Rastmitte 1-Gegenrastmittel-Verbindung gelöst bzw. gesperrt werden. Ein zusätzlicher Vorteil besteht bei einer Anformung des Sperrelements an dem ersten Gehäuseteil darin, dass keine zusätzlichen gesonderten Sperrelemente vorhanden sind. Dies vereinfacht die Montage, da keine gesonderten Sperrelemente handzuhaben sind. Aufgrund der reduzierten Teilevielfalt ist auch die Herstellung insgesamt kostengünstiger möglich. Ein weitere Vorteil besteht darin, dass die Sperrelemente unverlierbar mit dem ersten Gehäuseteil verbunden sind.

Für ein vereinfachtes Freigeben der Rastmittel-Gegenrastmittel-Verbindung ist an dem das Sperrelement tragenden Gehäuseteil ein zweiter Wanddurchbruch vorgesehen, der zwischen dem Rastmittel und dem Sperrelement verlaufenden angeordnet ist über den ein Werkzeug zum Schwenken des Sperrelement in die Freigabeposition einführbar ist. Der zweite Wanddurchbruch ist zwischen dem Rastmittel und dem Sperrelement angeordnet. Über diesen Wanddurchbruch ist ein Werkzeug, wie beispielsweise ein Schlitzschraubendreher einführbar. Durch Schwenken des Schlitzschraubendrehers, bzw. durch Schwenken dessen Klinge gegen den Uhrzeigersinn nach links, wird das Sperrelement aus seiner Sperrposition von dem Rastmittels weggeschwenkt und das zweite Ende des Sperrelements aus dem Rastvorsprung des Rastmittels ausgetrieben, bis das Sperrelement sich in seiner Freigabeposition befindet. Durch diese Maßnahme kann das Sperrelement aus der Sperrposition in die Freigabeposition geschwenkt werden.

Für ein vereinfachtes Entrasten der Rastmittel-Gegenrastmittel-Verbindung ist an dem das Rastmittel tragende Gehäuseteil ein dritter Wanddurchbruch vorgesehen, der auf einer vom Sperrelement abgewandten Seite des Rastmittels verlaufenden angeordnet ist über den ein Werkzeug zum Entriegeln des Rastmittel von dem Gegenrastmittel einführbar ist. Der dritte Wanddurchbruch ist auf einer vom Sperrelement abgewandten Seite des Rastmittels angeordnet. Über diesen Wanddurchbruch ist ein Werkzeug, wie beispielsweise ein Schlitzschraubendreher einführbar. Durch Schwenken des Schlitzschraubendrehers, bzw. durch Schwenken dessen Klinge gegen den Uhrzeigersinn nach links, wird das Rastmittels aus seiner mit dem Gegenrastmittel verrasteten Position von dem Gegenrastmittel weggeschwenkt und von diesem gelöst, so dass das erste Gehäuseteil von dem zweiten Gehäuseteil getrennt wird. So ist eine zerstörungsfrei Demontage der Gehäuseteile möglich.

Die insgesamt beschriebene Rastmittel-Gegenrastmittel-Verbindung für Haushaltsgeräte findet insbesondere bei elektromotorisch angetriebenen Entsaftern oder bei Saftzentrifugen Anwendung.

Ein bevorzugtes Ausführungsbeispiel der Erfindung ist anhand der Figuren 1 bis 5 im folgenden näher erläutert.

Es zeigen:

Figur 1 eine perspektivische Ansicht einer Saftzentrifuge, die erfindungsgemäße Gehäuseverrastungen aufweist;

Figur 2 eine Schnittansicht der Saftzentrifuge aus Figur 1 mit einer erfindungsgemäßen Gehäuseverrastung;

Figur 3 eine perspektivische Teilansicht auf ein erfindungsgemäße Gehäuseverrastung;

Figur 4 eine Schnittansicht der Gehäuseverrastung gemäß Figur 3 mit einem Sperrelement in der Freigabeposition;

Figur 5 eine Schnittansicht der Gehäuseverrastung gemäß Figur 3 mit einem Sperrelement in der Sperrposition.

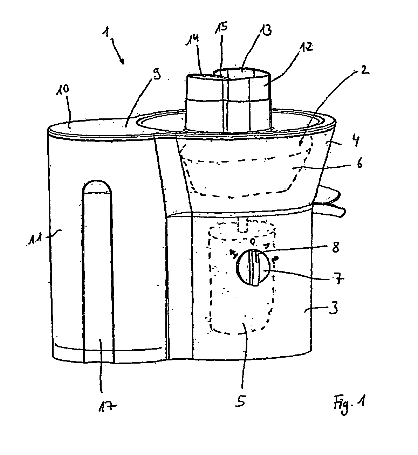

Eine in Figur 1 dargestellte Saftzentrifuge 1 weist ein Gehäuse 2 auf, das ein im wesentlichen hohlzylindrisches Unterteil 3 und ein konisch geformtes Oberteil 4 umfasst. Nur verdeckt schematisch sind ein im Unterteil 3 angeordneter Antriebsmotor 5 für ein im Oberteil 4 drehbar gelagertes Arbeitswerkzeug 6 gezeigt. Der elektrisch betreibbare Antriebsmotor 5 ist über ein drehbares Betätigungselement 7 steuerbar. Das Betätigungselement 7 ist als Drehknebel ausgebildet und an einer vorderen Seitenwand des hohlzylindrischen Unterteils 3 angebracht. In der dargestellten Drehposition des Betätigungselements 7 zeigt eine Strichmarkierung 8 die Schalterstellung "0" an, in der das Haushaltsgerät außer Betrieb gesetzt ist. In einer im Uhrzeigersinn weiter rechts gelegenen Schalterstellung "I" des Betätigungselements 7 ist die Saftzentrifuge 1 mit einer niedrigen Drehzahl angetrieben und in einer noch weiter rechts gelegenen Schalterstellung "II" des Betätigungselements 7 ist die Saftzentrifuge 1 mit einer hohen Drehzahl angetrieben. In einer im Uhrzeigesinn links von der Schalterstellung "0" gelegenen Schalterstellung "A" befindet sich das Betätigungselement 7 in einer Entriegelungsposition 18, in der ein Gerätedeckel 9 aus seiner Verriegelungsposition lösbar ist, so dass bei abgenommenen Gerätedeckel 9 das Arbeitswerkzeug 6 entnommen werden kann. Der Gerätedeckel 9 liegt auf einer Oberseite des Gehäuses 2 bündig auf und deckt auch eine obere Öffnung 10 eines Tresterbehälters 11 ab. Der Gerätedeckel 9 trägt einen Einfüllschacht 12 über den Nahrungsmittelstücke in das Gehäuse 2 auf das Arbeitswerkzeug 6 aufbringbar sind. Der Einfüllschacht 12 ist zweiteilig ausgebildet, d.h. es sind zwei Einfüllstutzen 13 und 14 vorhanden, die unterschiedliche Öffnungsquerschnitte aufweisen und die durch eine Schachtwand 15 voneinander getrennt sind. Die Einfüllstutzen 13 und 14 haben einen im wesentlichen kreisrunden bis ovalen Querschnitt, wobei der Querschnitt des Einfüllstutzens 13 größer als der Querschnitt des Einfüllstutzens 14 ausgebildet ist. Die über den Einfüllstutzen 13 oder 14 eingebrachten Nahrungsmittelstücke werden durch das Arbeitswerkzeug 6 in überwiegend feste Tresteranteile und in Saftanteile getrennt. Die Tresteranteile werden nach der Trennung im Tresterbehälter 11 gesammelt und die Saftanteile in einen Auffangbehälter 16 weitergeleitet. Der Tresterbehälter 11 weist an zwei gegenüberliegenden Behälterwänden muldenartig nach innen zurückspringende, rinnenförmige Griffbereiche 17 auf.

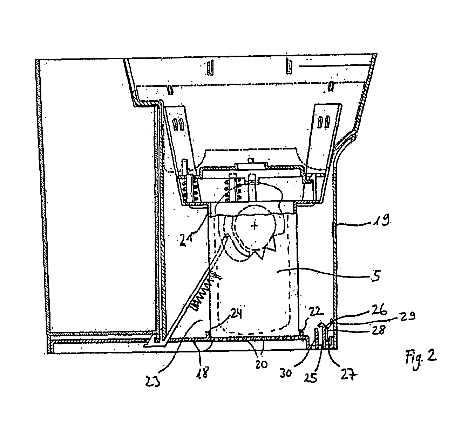

Das in Figur 2 in einer Schnittansicht dargestellte Gehäuse 2 weist ein erstes Gehäuseteil 18 und ein zweites Gehäuseteil 19 auf. Das erste Gehäuseteil 18 bildet einen Boden der Saftzentrifuge 1, der zur Kühlung des Motors 5 mit Luftdurchtritten 20 versehen ist. Der Motor 5 ist in einem Motortopf 21 gehalten, der in einem am ersten Gehäuseteil 18 angeformten Sitz 22 gehalten ist. Der Sitz 22 erstreckt sich als ringförmiger Vorsprung von der Innenseite des ersten Gehäuseteils 18 in einen Aufnahmeraum 23 für den Motortopf 21 des Motors 5. Damit der Motortopf 21 selbstzentrierend in den ringförmigen Sitz 22 einsetzbar ist, weist die obere Kante des Sitzes 22 eine Fase 24 auf. Das als Bodenplatte ausgebildete erste Gehäuseteil 18 trägt ein Rastmittel 25. Das Rastmittel 25 ist als eine an dem ersten Gehäuseteil 18 angeformte Lasche ausgebildet, die einen federnden Rasthaken 26 trägt. In seiner verrasteten Position hintergreift der Rasthaken 26 des Rastmittels 25 ein Gegenrastmittel 27 am zweiten Gehäuseteil 19. Das Gegenrastmittel 27 ist als Rastvorsprung 28 ausgebildet. Für eine zusätzliche stabile Verbindung von erstem Gehäuseteil 18 und zweitem Gehäuseteil 19 ist am ersten Gehäuseteil 18 eine Rastausnehmung 29 angeformt, in die der Rastvorsprung 28 des zweiten Gehäuseteils 19 eingreift. Das erste Gehäuseteil 18 und das zweite Gehäuseteil 19 sind an mehreren Stellen über eine Anzahl von Rastmittel 25 und Gegenrastmittel 27 verbunden- Diese Verbindungsstellen sind vorzugsweise zumindest annähernd gleichmäßig über den Umfang des Gehäuses 2 verteilt angeordnet.

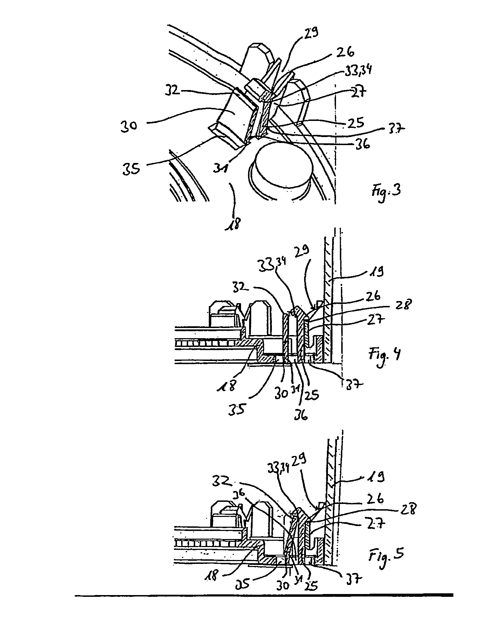

Die Funktion eines erfindungsgemäßen Sperrelements 30 ist in den Figuren 3 bis 5 dargestellt. Die Figur 3 zeigt in perspektivischer Ansicht und die Figur 4 in Schnittansicht eine Rastmittel 25 und Gegenrastmittel 27 Verbindung in einer Freigabeposition des Sperrelements 30. Das Sperrelement 30 ist als Lasche ausgebildet. Ein erstes Ende 31 des Sperrelements 30 ist an dem ersten Gehäuseteil 18 angeformt. Ein zweites freies Ende 32 des Sperrelements 30 ragt senkrecht nach oben und verläuft in der in Figur 3 gezeigten Freigabeposition im wesentlichen parallel zu dem Rastmittel 25, ohne in eine Rastnut 33 einzugreifen, die am oberen Ende des Rastmittels 25 dem Rasthaken 26 gegenüberliegend angeformt ist. Angepaßt an die Form des zweiten freien Endes 32 des Sperrelements 30 kann die Rastnut 3 auch als geeignet geformter Rastvorsprung 34 ausgebildet sein.

Die Figur 5 zeigt in Schnittansicht die Rastmittel 25 und Gegenrastmittel 27 Verbindung in einer Sperrposition des Sperrelements 30. Das erste Ende 31 des Sperrelements 30 ist an dem ersten Gehäuseteil 18 derart angeformt, dass es von seiner senkrechten, im wesentlichen parallel zum Rastmittel 25 verlaufenden Lage in eine in Figur 5 im Uhrzeigersinn nach rechts geschwenkten Lage gebogen ist. In dieser nach rechts geschwenkten Lage greift das zweite Ende 32 des Sperrelements 30 in den Rastvorsprung 34 des Rastmittels 25 ein und fixiert dadurch das Rastmittel 25 in seiner Lage. Ein ungewolltes Schwenken des Rastmittels 25 in eine in Figur 5 gegen den Uhrzeigersinn nach links geschwenkten Lage ist nicht mehr möglich, wodurch zuverlässig verhindert ist, dass der Rasthaken 26 des Rastmittels 25 von dem Rastvorsprung 28 des Gegenrastmittels 27 abrutschen kann.

Das erste Gehäuseteil 18, welches das Sperrelement 30 trägt, weist einen ersten Wanddurchbruch 35 auf. Der erste Wanddurchbruch 35 ist auf einer vom Rastmittel 25 abgewandten Seite des Sperrelements 30 angeordnet. Über diesen Wanddurchbruch 35 ist ein Werkzeug, wie beispielsweise ein Schlitzschraubendreher einführbar. Durch Schwenken des Schlitzschraubendrehers, bzw. durch Schwenken dessen Klinge (nicht dargestellt), in Figur 4 im Uhrzeigersinn nach rechts, wird das Sperrelement 30 aus seiner Freigabeposition (Figur 3 und 4) in Richtung des Rastmittels 25 geschwenkt und das zweite Ende 32 des Sperrelements 30 in den Rastvorsprung 34 des Rastmittels 25 eingedrückt, bis das Sperrelement 30 in seiner Sperrposition (Figur 5) fixiert ist.

Das erste Gehäuseteil 18, welches das Sperrelement 30 trägt, weist einen zweiten Wanddurchbruch 36 auf. Der zweite Wanddurchbruch 36 ist zwischen dem Rastmittel 25 und dem Sperrelement 30 angeordnet. Über diesen Wanddurchbruch 36 ist ein Werkzeug, wie beispielsweise ein Schlitzschraubendreher einführbar. Durch Schwenken des Schlitzschraubendrehers, bzw. durch Schwenken dessen Klinge (nicht dargestellt) in Figur 5 gegen den Uhrzeigersinn nach links, wird das Sperrelement 30 aus seiner Sperrposition (Figur 5) von dem Rastmittels 25 weggeschwenkt und das zweite Ende 32 des Sperrelements 30 aus dem Rastvorsprung 34 des Rastmittels 25 ausgetrieben, bis das Sperrelement 30 sich in seiner Freigabeposition (Figur 3 und 4) befindet. Durch diese Maßnahme kann das Sperrelement 30 aus der Sperrposition in die Freigabeposition geschwenkt werden.

Das erste Gehäuseteil 18, welches das Sperrelement 30 trägt, weist einen dritten Wanddurchbruch 37 auf. Der dritte Wanddurchbruch 37 ist auf einer vom Sperrelement 30 abgewandten Seite des Rastmittels 25 angeordnet. Über diesen Wanddurchbruch 37 ist ein Werkzeug, wie beispielsweise ein Schlitzschraubendreher einführbar. Durch Schwenken des Schlitzschraubendrehers, bzw. durch Schwenken dessen Klinge (nicht dargestellt) in Figur 4 oder 5 gegen den Uhrzeigersinn nach links, wird das Rastmittels 25 aus seiner mit dem Gegenrastmittel 27 verrasteten Position (Figur 4 und 5) von dem Gegenrastmittel 27 weggeschwenkt und von diesem gelöst, so dass das erste Gehäuseteil 18 von dem zweiten Gehäuseteil 19 getrennt wird. So ist eine zerstörungsfrei Demontage der Gehäuseteile 18 und 19 möglich.

## Patentansprüche

1. Haushaltsgerät mit mindestens einem ersten Gehäuseteil (18), das ein Rastmittel (25) aufweist und mindestens einem zweiten Gehäuseteil (19), das ein Gegenrastmittel (27) aufweist, welche Rast- und Gegenrastmittel (25, 27) zur Verbindung der Gehäuseteile (18, 19) vorgesehen sind und denen ein Sperrelement (30) zugeordnet ist, durch welches das Rastmittel (25) in einer Sperrposition des Sperrelements (30) gegen Lösen von dem Gegenrastmittel (27) gesichert ist, wobei das Sperrelement (30) ein erstes, sich an einem der Gehäuseteile (18,19) abstützendes Ende (31) und ein zweites in der Sperrposition an dem Rastmittel (25) verrastbares Ende (32) aufweist und derart am Gehäuseteil (18, 19) befestigt ist, dass es aus einer Freigabeposition in die Sperrposition bewegbar ist, **dadurch gekennzeichnet, dass** eine der beiden Elemente Rastmittel (25) und Gegenrastmittel (27) als federnder Rasthaken an dem ihm zugeordneten Gehäuseteil (18, 19) angeformt ist und in das jeweils andere der beiden Elemente Rastmittel (25) und Gegenrastmittel (27), das an dem ihm zugeordneten Gehäuseteil (18,19) als Rastausnehmung (29) oder Rastvorsprung (28) ausgebildet ist, eingreifen kann.

2. Haushaltsgerät nach Anspruch 1, **dadurch gekennzeichnet, dass** das Sperrelement (30) in der Freigabeposition eine spannungsfreie Lage einnimmt.

3. Haushaltsgerät nach Anspruch 1 oder 2, **dadurch gekennzeichnet, dass** das Sperrelement (30) in der Sperrposition elastisch vorgespannt am Rastmittel (25) gehalten ist.

4. Haushaltsgerät nach einem der Ansprüche 1 bis 3, **dadurch gekennzeichnet, dass** das zweite Ende (32) des Sperrelements (30) in der Sperrposition in eine Rastnut (33) oder einen Rastvorsprung (34) am Rastmittel (25) eingreift

5. Haushaltsgerät nach Anspruch 4, **dadurch gekennzeichnet, dass** die Rastnut (33) oder der Rastvorsprung (34) dem Gegenrastmittel (27) gegenüberliegend am Rastmittel (25) vorgesehen ist.

6. Haushaltsgerät nach einem der Ansprüche 1 bis 5, **dadurch gekennzeichnet, dass** das Sperrelement (30) als eine am Gehäuseteil (18) angeformte Federzunge ausgebildet ist, die aus einer entspannten, im wesentlichen parallel zum Rastmittel (25) verlaufenden Freigabeposition in eine elastisch gespannte Sperrposition biegbar ist.

7. Haushaltsgerät nach einem der Ansprüche 1 bis 6, **dadurch gekennzeichnet, dass** das Rastmittel (25) als ein am ersten Gehäuseteil (18) angeformter, federnder Rasthaken (26) ausgebildet ist, der in das als Rastausnehmung (29) oder Rastvorsprung (28) ausgebildetes Gegenrastmittel (27) am zweiten Gehäuseteil (19) eingreift.

8. Haushaltsgerät nach einem der Ansprüche 1 bis 6, **dadurch gekennzeichnet, dass** Das Rastmittel (25) als eine am ersten Gehäuseteil (18) angeformte Rastausnehmung (29) oder Rastvorsprung (28) ausgebildet ist, an die ein als Federnder Rasthaken (26) ausgebildetes Gegenrastmittel (27) des zweiten Gehäuseteils (19) eingreift.

9. Haushaltsgerät nach einem der Ansprüche 6 bis 8, **dadurch gekennzeichnet, dass** Ein das Sperrelement (30) tragende Gehäuseteil (18) einen ersten Wanddurchbruch (35) aufweist, der auf einer vom Rastmittel (25) abgewandten Seite des Sperrelements (30) verlaufenden angeordnet ist und über den ein Werkzeug zum Schwenken des Sperrelement (30) in die Sperrposition einführbar ist

10. Haushaltsgerät nach einem der Ansprüche 6 bis 9, **dadurch gekennzeichnet, dass** ein das Sperrelement (30) tragende Gehäuseteil (18) einen zweiten Wanddurchbruch (36) aufweist, der zwischen dem Rastmittel (25) und dem Sperrelement (30) verlaufenden angeordnet ist über den ein Werkzeug zum Schwenken des Sperrelement (30) in die Freigabeposition einführbar ist.

11. Haushaltsgerät nach einem der Ansprüche 6 bis 10, **dadurch gekennzeichnet, dass** ein das Rastmittel (25) tragende Gehäuseteil (18) einen dritten Wanddurchbruch (37) aufweist, der auf einer vom Sperrelement (30) abgewandten Seite des Rastmittels (25) verlaufenden angeordnet ist über den ein Werkzeug zum Entriegeln des Rastmittels (25) von dem Gegenrastmittel (27) einführbar ist.

12. Haushaltsgerät nach einem der Ansprüche 1 bis 11, **dadurch gekennzeichnet, dass** Das Haushaltsgerät ein elektromotorisch angetriebener Entsafter oder eine Saftzentrifuge (1) ist.

## Claims

1. Domestic appliance with at least one first housing part (18) having detent means (25) and at least one second housing part (19) having counter-detent means (27), which detent means and counter-detent means (25, 27) are provided for connecting the housing parts (18, 19) and with which a blocking element (30) is associated, by which the detent means (25) can be secured in a blocking position of the blocking element (30) against detaching from the counter-detent means (27), wherein the blocking element (30) has a first end (31) supported at one of the housing parts (18, 19) and a second end (32), which in the blocking position is detentable with the detent means (25) and which is so fastened to the housing part (18, 19) that it is movable out of a release position into the blocking position, **characterised in that** one of the two elements of detent means (25) and counter-detent means (27) is formed at the housing part (18, 19) associated therewith as a resilient detent hook and can engage in the respective other one of the two elements of detent means (25) and counter-detent means (27), which is constructed at the housing part (18, 19) associated therewith as a detent recess (29) or detent projection (28).

2. Domestic appliance according to claim 1, **characterised in that** the blocking element (30) in the release position adopts a position free of stress.

3. Domestic appliance according to claim 1 or 2, **characterised in that** the detent element (30) in the blocking position is held at the detent means (25) under resilient bias.

4. Domestic appliance according to any one of claims 1 to 3, **characterised in that** the second end (32) of the blocking element (30) in the blocking position engages in a detent groove (33) or a detent projection (34) at the detent means (25).

5. Domestic appliance according to claim 4, **characterised in that** the detent groove (33) or the detent projection (34) is provided at the detent means (25) to be opposite the counter-detent means (27).

6. Domestic appliance according to any one of claims 1 to 5, **characterised in that** the blocking element (30) is constructed as a spring tongue which is formed at the housing part (18) and which is bendable from a relaxed release position extending substantially parallel to the detent means (25) into a resiliently biased blocking position.

7. Domestic appliance according to any one of claims 1 to 6, **characterised in that** the detent means (25) is constructed as a resilient detent hook (26) which is formed at the first housing part (18) and which engages in the counter-detent means (27), which is constructed as a detent recess (29) or detent projection (18), at the second housing part (19).

8. Domestic appliance according to any one of claims 1 to 6, **characterised in that** the detent means (25) is constructed as a detent recess (29) or detent projection (28) which is formed at the first housing part (18) and at which a counter-detent means (27), which is constructed as a resilient detent hook (27), of the second housing part (19) engages.

9. Domestic appliance according to any one of claims 6 to 8, **characterised in that** a housing part (18) carrying the blocking element (30) has a first wall passage (35) which is arranged to extend on a side of the blocking element (30) remote from the detent means (25) and by way of which a tool for pivoting the blocking element (30) into the blocking position introducible.

10. Domestic appliance according to any one of claims 6 to 9, **characterised in that** a housing part (18) carrying the blocking element (30) has a second wall passage (36) which is arranged to extend between the detent means (25) and the blocking element (30) and by way of which a tool for pivoting the blocking element (30) into the release position is introducible.

11. Domestic appliance according to any one of claims 6 to 10, **characterised in that** a housing part (18) carrying the detent means (25) has a third wall passage (37) which is arranged to extend on a side of the detent means (25) remote from the blocking element (30) and by way of which a tool for unlocking the detent means (25) from the counter-detent means (27) is introducible.

12. Domestic appliance according to any one of claims 1 to 11, **characterised in that** the domestic appliance is a juice extractor or a juice centrifuge (1) driven by electric motor.

## Revendications

1. Appareil ménager avec au moins une première partie de boîtier (18) qui présente un moyen d'encliquetage (25) et au moins une deuxième partie de boîtier (19) qui présente un moyen de contre-encliquetage (27), lesquels moyens d'encliquetage et de contre-encliquetage (25, 27) sont prévus pour relier les parties de boîtier (18, 19) et auxquels un élément de verrouillage (30) est attribué, via lequel, dans une position verrouillée de l'élément de verrouillage (30), le moyen d'encliquetage (25) est protégé contre le détachement du moyen de contre-encliquetage (27), dans lequel l'élément de verrouillage (30) présente une première extrémité (31) s'appuyant sur l'une des parties de boîtier (18, 19) et une deuxième extrémité (32) pouvant être encliquetée au moyen d'encliquetage (25) en position verrouillée et est fixé à la partie de boîtier (18, 19) de telle manière qu'il peut être déplacé d'une position de déverrouillage dans la position de verrouillage, **caractérisé en ce que** l'un des deux éléments moyen d'encliquetage (25) et moyen de contre-encliquetage (27) est exécuté sous forme de crochet d'encliquetage élastique à la partie de boîtier (18, 19) lui attribuée et peut s'emboîter dans l'autre élément respectif des deux éléments moyen d'encliquetage (25) et moyen de contre-encliquetage (27) réalisé sous forme de creux d'encliquetage (29) ou de saillie d'encliquetage (28) à la partie de boîtier lui attribuée (18, 19).

2. Appareil ménager selon la revendication 1, **caractérisé en ce que**, en position déverrouillée, l'élément de verrouillage (30) adopte une position exempte de tension.

3. Appareil ménager selon la revendication 1 ou 2, **caractérisé en ce que**, en position verrouillée, l'élément de verrouillage (30) est maintenu par précontrainte élastique sur le moyen d'encliquetage (25).

4. Appareil ménager selon l'une des revendications 1 à 3, **caractérisé en ce que**, en position verrouillée, la deuxième extrémité (32) de l'élément de verrouillage (30) s'emboîte au moyen d'encliquetage (25), dans une encoche d'encliquetage (33) ou une saillie d'encliquetage (34).

5. Appareil ménager selon la revendication 4, **caractérisé en ce que** l'encoche d'encliquetage (33) ou la saillie d'encliquetage (34) est prévue sur le moyen d'encliquetage (25), face au moyen de contre-encliquetage (27).

6. Appareil ménager selon l'une des revendications 1 à 5, **caractérisé en ce que** l'élément de verrouillage (30) est réalisé sur la partie de boîtier (18) sous forme de lamelle flexible qui peut être ployée d'une position déverrouillée sans tension sensiblement parallèle au moyen d'encliquetage (25) dans une position verrouillée par précontrainte élastique.

7. Appareil ménager selon l'une des revendications 1 à 6, **caractérisé en ce que** le moyen d'encliquetage (25) est réalisé sur la première partie de boîtier (18) sous forme de crochet d'encliquetage élastique (26) qui s'emboîte dans le moyen de contre-encliquetage (27) réalisé sur la deuxième partie de boîtier (19) sous forme de creux d'encliquetage (29) ou de saillie d'encliquetage (28).

8. Appareil ménager selon l'une des revendications 1 à 6, **caractérisé en ce que** le moyen d'encliquetage (25) est réalisé sur la première partie de boîtier (18) sous forme de creux d'encliquetage (29) ou de saillie d'encliquetage (28) dans lequel s'emboîte un moyen de contre-encliquetage (27) de la deuxième partie de boîtier (19) réalisé sous forme de crochet d'encliquetage (26).

9. Appareil ménager selon l'une des revendications 6 à 8, **caractérisé en ce qu'**une partie de boîtier (18) portant l'élément de verrouillage (30) présente une première perforation de paroi (35) qui est agencée d'un côté de l'élément de verrouillage (30) détourné du moyen d'encliquetage (25) et par laquelle un outil peut être introduit afin d'engager l'élément de verrouillage (30) en position verrouillée.

10. Appareil ménager selon l'une des revendications 6 à 9, **caractérisé en ce qu'**une partie de boîtier (18) portant l'élément de verrouillage (30) présente une deuxième perforation de paroi (36) qui est agencée entre le moyen d'encliquetage (25) et l'élément de verrouillage (30) et par laquelle un outil peut être introduit afin d'engager l'élément de verrouillage (30) en position déverrouillée.

11. Appareil ménager selon l'une des revendications 6 à 10, **caractérisé en ce qu'**une partie de boîtier (18) portant le moyen d'encliquetage (25) présente une troisième perforation de paroi (37) qui est agencée d'un côté de l'élément de verrouillage (30) différent de celui du moyen d'encliquetage (25) et par laquelle un outil peut être introduit afin de désengager le moyen d'encliquetage (25) du moyen de contre-encliquetage (27).

12. Appareil ménager selon l'une des revendications 1 à 11, **caractérisé en ce que** l'appareil ménager est un extracteur de jus actionné par moteur électrique ou une centrifugeuse à jus (1).
